# EUROPEAN PATENT APPLICATION

(11) **EP 2 814 211 A1**
(43) Date of publication of application: **17.12.2014**
(21) Application number: 12868196.2
(22) Date of filing: 17.04.2012
(51) Int. Cl.: H04L 12/58

(54) **METHOD AND DEVICE FOR DISPLAYING CONVERSATION INFORMATION**

(30) Priority: 08.02.2012 CN 201210027501
(71) Applicant: ZTE Corporation, Shenzhen, Guangdong 518057 (CN)
(72) Inventor: LI, Cong, Shenzhen Guangdong 518057 (CN)
(74) Representative: Brevalex
(86) International application number: PCT/CN2012/074205
(87) International publication number: WO 2013/117051

(57) **Abstract**

The disclosure provides a method for displaying session information and a device for displaying session information. The method includes the following steps of: acquiring a splitting operation for session information, wherein the splitting operation is used for splitting the session information into multiple pieces of sub-session information; acquiring a grouping condition and a grouping index for each piece of sub-session information according to the splitting operation; constructing a management structure and a display structure for each piece of sub-session information according to the grouping condition and the grouping index for each piece of sub-session information; and splitting the session information into multiple pieces of sub-session information according to the management structure and the display structure for each piece of sub-session information. Through the technical solution, the session information is displayed more quickly, and the session information accessed by the user is clearer and more concise.

## Description

### TECHNICAL FIELD

The disclosure relates to the technical field of radio communications, and more particularly to a method and a device for displaying session information.

### BACKGROUND

With the development of the communication technologies, mobile communication terminals, such as mobile phones, are becoming popular. Ways for managing and displaying session information are used more and more widely. Especially for an intelligent mobile terminal and a tablet mobile terminal, a session mode has become a basic way for managing and displaying information. For example, a session mode has been provided by the native code of Android.

In comparison with the conventional box mode, by way of managing and displaying information in the session mode, the information in each box based on the same contact may be combined into one session to be displayed and managed. A user can view, write and reply information based on one piece of session. This is absolutely more appropriate to the habit of the user, thereby improving the user experience.

The current way for managing and displaying information in the session mode is to combine the information in each box based on the same contact into one piece of session for display and management in term of the time. Thereby, one piece of session may display all the information related to the contact. When there are multiple pieces of related information, a huge number of intermingled contents may be displayed, which not only affects the performance of a mobile terminal but also is unfavorable for a user to view concerned information.

Moreover, in accordance with the habit of the user, there is always much related information between the user and some key contacts, so that the defects of the session mode are more obvious when there are multiple pieces of information based on the same contact.

In the prior art, the defects of the session mode are not optimized and adjusted when there are a huge number of pieces of information based on the same contact. Actually, all the information based on the same contact may not be the information of the same session about the same theme; and the user may contact with the contact about different themes through different sessions at different times. Even the information of the same contact in other instant messaging tools is also distinguished into current information and historical information.

Therefore, it is necessary to optimize and improve the defects of the existing session mode when there are a huge number of pieces of information based on the same contact.

### SUMMARY

In order to solve the technical problem, the disclosure provides a method for displaying session information and a device for displaying session information, so that the session information accessed by the user is clearer and more concise.

To this end, a technical solution of the disclosure is implemented as follows.

A method for displaying session information includes that:
A splitting operation for session information is acquired wherein the splitting operation is used for splitting the session information into multiple pieces of sub-session information;
a grouping condition and a grouping index for each piece of sub-session information are acquired according to the splitting operation;
a management structure and a display structure for each piece of sub-session information are constructed according to the grouping condition and the grouping index for each piece of sub-session information; and
the session information is split into multiple pieces of sub-session information according to the management structure and the display structure for each piece of sub-session information.

The splitting operation includes that:
in a piece of session information, a single piece of information belonging to the session information is clicked; and
the current session information is split into two pieces of new sub-session information defined by the single piece of information by the clicking operation.

The splitting operation includes that:
a new single piece of information is edited;
a contact corresponding to the new single piece of information is selected; and
the current session information related to the contact and containing the current time is split into two pieces of sub-session information, and the new single piece of information related to the contact is set to be a new initial single piece of information containing the session at the current time.

The grouping index is used for indicating a location of session information.

The grouping condition includes any one or more of the following: contact information of session information, grouping interval of session information, keyword of session information and theme of session information.

A device for displaying session information includes:
a first acquisition module configured to acquire a splitting operation for session information, wherein the splitting operation is used for splitting the session information into multiple pieces of sub-session information;
a second acquisition module configured to acquire a grouping condition and a grouping index for each piece of sub-session information according to the splitting operation;
a first construction module configured to construct a management structure and a display structure for each piece of sub-session information according to the grouping condition and the grouping index for each piece of sub-session information; and
a second update module configured to split the session information into multiple pieces of sub-session information according to the management structure and the display structure for each piece of sub-session information.

The splitting operation includes that:
in a piece of session information, a single piece of information belonging to the session information is clicked; and
the current session information is split into two pieces of new sub-session information defined by the single piece of information by the clicking operation.

The splitting operation includes that:
a new single piece of information is edited;
a contact corresponding to the new single piece of information is selected; and
the current session information related to the contact and containing the current time is split into two pieces of sub-session information, and the new single piece of information related to the contact is set to be a new initial single piece of information containing the session at the current time.

A method for displaying session information includes that:
A combination operation for session information is acquired, wherein the combination operation is used for combining at least two pieces of session information into one piece of new session information;
at least two pieces of session information requiring to be combined are acquired according to the combination operation, and a grouping condition and a grouping index for the new combined session information are acquired;
a management structure and a display structure for the new combined session information are constructed according to the grouping condition and the grouping index of session information; and
multiple pieces of session information are combined into one piece of new session information according to the management structure and the display structure of the new combined session information.

The combination operation includes that:
selecting a previous/next session information for combination; and
combining the current session information with the previous/next session information of which the contact is the same as and the time interval is close to that of the current session information into one piece of new session information.

The combination operation includes that:
multiple pieces of continuous session information based on a specific contact are combined into one piece of new session information.

A device for displaying session information includes:
a third acquisition module configured to acquire a combination operation for session information, wherein the combination operation is used for combining at least two pieces of session information into one piece of new session information;
a fourth acquisition module configured to acquire at least two pieces of session information requiring to be combined according to the combination operation and acquire a grouping condition and a grouping index for the new combined session information;
a second construction module configured to construct a management structure and a display structure for the new combined session information according to the grouping condition and the grouping index of the session information; and
a second update module configured to combine multiple pieces of session information into one piece of new session information according to the management structure and the display structure of the new combined session information.

It can be seen from the technical solution above that the embodiments of the disclosure have the following advantages that:
1. In the embodiment, a piece of session information is split into multiple pieces of sub-session information through the management structure and the display structure of the split sub-session information, so that the problem that when multiple pieces of information are based on the same contact, a huge number of intermingled contents may be displayed in the existing session mode, which not only affects the display performance but also is unfavorable for a user to acquire the concerned information quickly, can be solved. Through the technical solution of the embodiment, the session information may be displayed more quickly and the session information accessed by the user is clearer and more concise.
2. In the embodiment, according to the management structure and the display structure of session information, a user can set up, split and recombine session information conveniently, so that the management way and the display way of session information are enriched.
3. In the embodiment, according to the management structure and the display structure of session information, a piece of session information may be a set of factors based on a time interval of a contact, on some themes or on other distinguishable session information, which is absolutely more appropriate to a common habit of defining session information of the user. Moreover, due to the controllable set-up, splitting and combination of the user, the display of session mode information and the management of sessions are more personalized, thereby greatly improving the user experience.

### BRIEF DESCRIPTION OF THE DRAWINGS

Fig. 1 is a flowchart of a method for displaying session information in a first embodiment of the disclosure;
Fig. 2 is a diagram showing the structure of a device for displaying session information in a first embodiment of the disclosure;
Fig. 3 is a flowchart of a method for displaying session information in a second embodiment of the disclosure; and
Fig. 4 is a diagram showing the structure of a device for displaying session information in a second embodiment of the disclosure.

### DETAILED DESCRIPTION

For a better understanding of embodiments of the disclosure, the terms in the embodiments are introduced below at first:
session information, referring to information in a session mode, such as text information in a session mode and voice information in a session mode;
sub-session information, referring to a single piece of information composing the session information;
grouping condition, used for identifying a category of session information, for example, the grouping condition including any one or more of the following: contact information of session information, grouping interval of session information, keyword of session information and theme of session information;
grouping index, used for indicating the location of corresponding session information, such as a storage location;
management structure of session information, which is used for managing session information and may be generated through the grouping condition and the grouping index; and
display structure of session information, which is used for displaying session information and may be generated through the grouping condition and the grouping index.
To describe the objectives, technical solution and advantages of the disclosure more clearly, the embodiments of the disclosure may be further described below in combination with the accompanying drawings and embodiments in detail. Here, the schematic embodiments of the disclosure and the description thereof are used for explaining the disclosure instead of limiting the disclosure.

The technical solution of the disclosure is described below through an embodiment of splitting session information based on a session mode and an embodiment of combining session information based on a session mode respectively.

### <First embodiment>

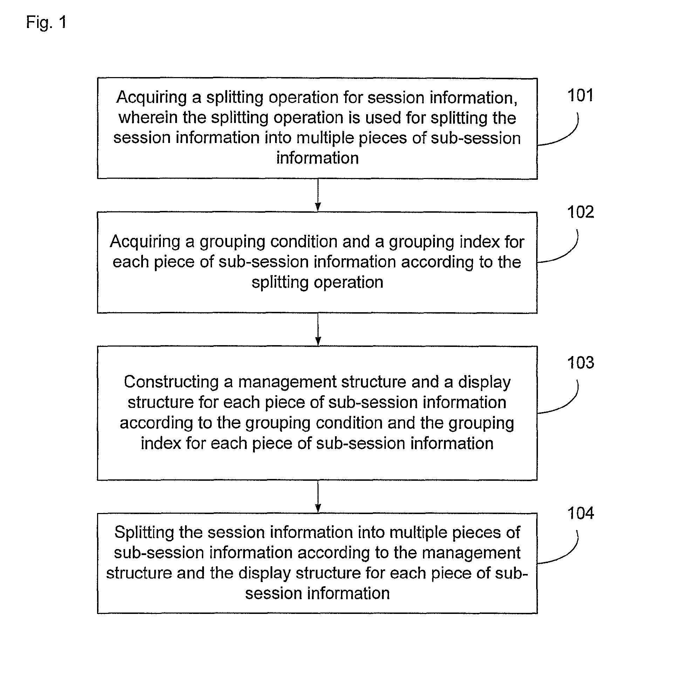

As shown in Fig. 1, which is a flowchart of a method for displaying session information in an embodiment of the disclosure, the method specifically includes:
Step 101: a splitting operation for session information is acquired, wherein the splitting operation is used for splitting the session information into multiple pieces of sub-session information.

In the embodiment, the splitting operation can be implemented as follows:
(1) A user clicks, in a piece of session information, a single piece of information belonging to the session information, so as to split the current session information into two pieces of new sub-session information defined by this single piece of information by the clicking operation.
(2) A user edits a new single piece of information, selects the contact corresponding to the new single piece of information, and splits the current session information related to the contact now and containing the current time into two pieces of sub-session information; and this single piece of information related to the contact is set as a new initial single piece of information containing the session at the current time.

Of course, it shall be understood that the splitting operation in the embodiment of the disclosure is not limited that described above.

In the embodiment, when a single piece of information is displayed, a function of displaying all the session information is provided. Namely, all the information related to the contact can be displayed in the single piece of information without changing and damaging the grouping structure of the session information.

Step 102: According to the splitting operation, the grouping condition and the grouping index of corresponding sub-session information are acquired.

In the embodiment, the grouping index is used for indicating the location of corresponding sub-session information, such as indicating a storage location of sub-session information.

In the embodiment, the grouping condition includes the following factors: contact information of session information, grouping interval of session information, keyword of session information, theme of session information and the like, all of which can be a part of the grouping condition.

Step 103: A management structure and a display structure of the split sub-session information are constructed according to the grouping condition and the grouping index of sub-session information.

For example, the underlying database of a terminal device dynamically constructs the management structure and the display structure of the split sub-session information according to the grouping condition and the grouping index of sub-session information.

Step 104: The session information is split into multiple pieces of sub-session information according to the management structure and the display structure of the split sub-session information.

For example, each piece of sub-session information is managed and displayed based on the split session information by dynamically updating the display of each piece of session information.

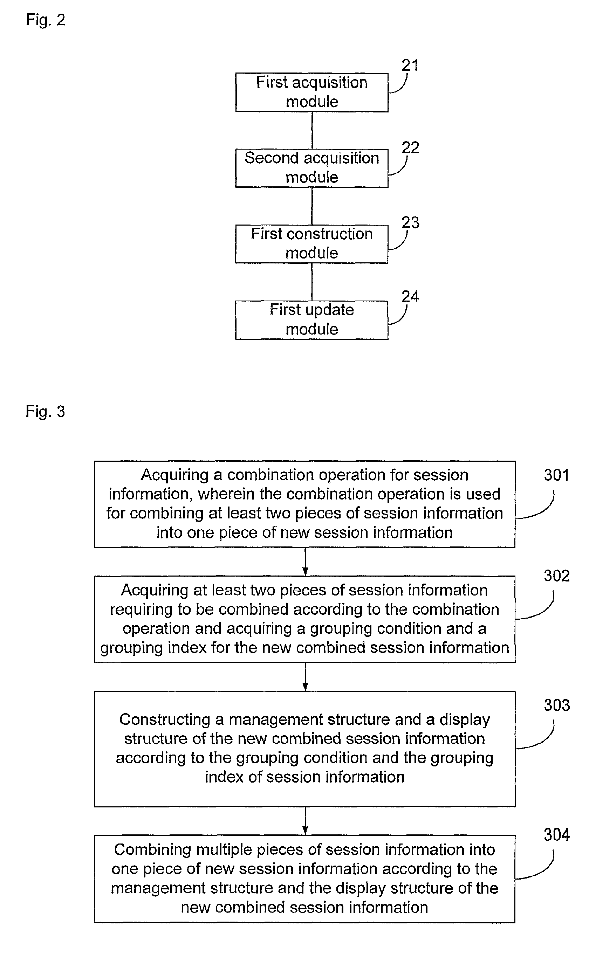

As shown in Fig. 2, which is a diagram showing the structure of a device for displaying session information in an embodiment of the disclosure, the device includes:
a first acquisition module 21, which is configured to acquire a splitting operation for session information, wherein the splitting operation is used for splitting the session information into multiple pieces of sub-session information;
a second acquisition module 22, which is configured to acquire a grouping condition and a grouping index for each piece of sub-session information according to the splitting operation;
a first construction module 23, which is configured to construct a management structure and a display structure for each piece of sub-session information according to the grouping condition and the grouping index for each piece of sub-session information; and
a first update module 24, which is configured to split the session information into multiple pieces of sub-session information according to the management structure and the display structure for each piece of sub-session information.

In another embodiment of the disclosure, the splitting operation includes:
in a piece of session information, a single piece of information belonging to the session information is clicked; and the current session information is split into two pieces of new sub-session information defined by the single piece of information by the clicking operation.

In another embodiment of the disclosure, the splitting operation includes that:
a new single piece of information is edited;
a contact corresponding to the new single piece of information is selected; and the current session information related to the contact and containing the current time is split into two pieces of sub-session information, and the new single piece of information related to the contact is set to be a new initial single piece of information containing the session at the current time.

In the embodiment, a piece of session information is split into multiple pieces of sub-session information through the management structure and the display structure of the split sub-session information, so that the problem that when multiple pieces of information are based on the same contact, a huge number of intermingled contents may be displayed in the existing session mode, which not only affects the display performance but also is unfavorable for a user to acquire the concerned information quickly, can be solved. Through the technical solution of the embodiment, the session information may be displayed more quickly and the session information accessed by the user is clearer and more concise.

### <Second embodiment>

As shown in Fig. 3, which is a flowchart of a method for displaying session information in an embodiment of the disclosure, the method specifically includes that:
Step 301: a combination operation for session information is acquired, wherein the combination operation is used for combining at least two pieces of session information into one piece of new session information.

In the embodiment, the combination operation can be implemented in the following ways:
(1) A user clicks the menu in a piece of session information to select the previous session information for combination, so that the current session information and the previous session information of which the contact is the same as and the time interval is close to that of the current session information are combined into one piece of new session information.
(2) A user clicks the menu in a piece of session information to select the next session information for combination, so that the current session information and the next session information of which the contact is the same as and the time interval is close to that of the current session information are combined into one piece of new session information.
(3) A user clicks the menu in a piece of session information to combine multiple pieces of continuous session information based on a specific contact into one piece of new session information.

Of course, it can be understood that the combination operation in the embodiment is not limited to the operation described above, and the condition of combining the session may be not limited to the contact and the time and may include any other factors which can be taken as the condition.

In the embodiment, when a single piece of information is displayed, a function of displaying session mode information is provided. Namely, all the information related to the contact can be displayed in the single piece of information without changing and damaging the grouping structure of the current and later sessions.
Step 302: At least two pieces of session information requiring to be combined are acquired according to the combination operation and a grouping condition and a grouping index of the corresponding new combined session information are acquired.

In the embodiment, the grouping index is used for showing the location of the corresponding session information, such as showing a storage location of session information.

In the embodiment, the grouping condition includes the following: contact information of session information, grouping interval of session information, keyword of session information, theme of session information and the like, all of which can be taken as one part of the grouping condition.
Step 303: A management structure and a display structure of the new combined session information are constructed according to the grouping condition and the grouping index of session information.
Step 304: Multiple pieces of session information are combined into one piece of new session information according to the management structure and the display structure of the new combined session information.

In the embodiment, according to the management structure and the display structure of session information, a user can set up, split and combine session information conveniently, so that the management way and the display way of session information are enriched.

Furthermore, in the embodiment, according to the management structure and the display structure of session information, a piece of session information may be a set of factors based on a time interval of a contact, on some themes or on other distinguishable session information, which is absolutely more appropriate to a common habit of defining session information of the user. Moreover, due to the controllable set-up, splitting and combination of the user, the display of session mode information and the management of sessions are more personalized, thereby greatly improving the user experience.

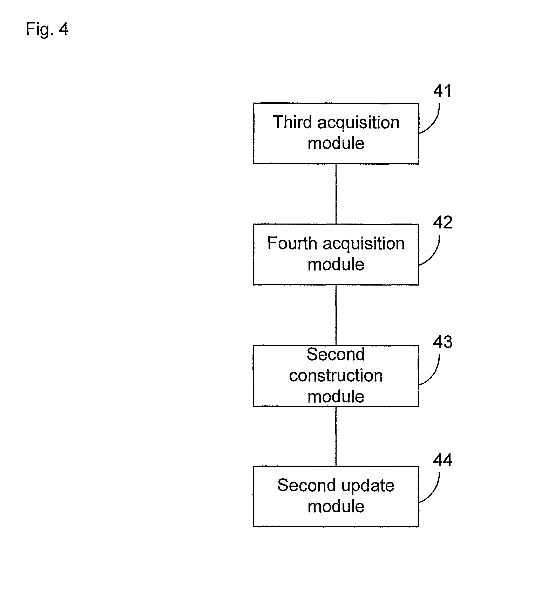

As shown in Fig. 4, which is a diagram showing the structure of a device for displaying session information in an embodiment of the disclosure, the device includes:
a third acquisition module 41, which is configured to acquire a combination operation for session information, wherein the combination operation is used for combining at least two pieces of session information into one piece of new session information;
a fourth acquisition module 42, which is configured to acquire at least two pieces of session information requiring to be combined according to the combination operation and acquire the grouping condition and the grouping index for the corresponding new combined session information;
a second construction module 43, which is configured to construct a management structure and a display structure for the new combined session information according to the grouping condition and the grouping index of session information; and
a second update module 44, which is configured to combine multiple pieces of session information into one piece of new session information according to the management structure and the display structure of the new combined session information.

In another embodiment of the disclosure, the combination operation includes that:
a previous/next session information is selected for combination, and the current session information and the previous/next session information of which the contact is the same as and the time interval is close to that of the current session information are combined into one piece of new session information.

In another embodiment of the disclosure, the combination operation includes that:
multiple pieces of continuous session information based on a specific contact are combined into one piece of new session information.

The above are only the preferred embodiments of the disclosure, and are not intended to limit the scope of protection of the claims of the disclosure.

## Claims

1. A method for displaying session information, comprising:
acquiring a splitting operation for session information, wherein the splitting operation is used for splitting the session information into multiple pieces of sub-session information;
acquiring a grouping condition and a grouping index for each piece of sub-session information according to the splitting operation;
constructing a management structure and a display structure for each piece of sub-session information according to the grouping condition and the grouping index for each piece of sub-session information; and
splitting the session information into multiple pieces of sub-session information according to the management structure and the display structure for each piece of sub-session information.

2. The method according to claim 1, wherein the splitting operation comprises:
in a piece of session information, clicking a single piece of information belonging to the session information; and
splitting the current session information into two pieces of new sub-session information defined by the single piece of information by the clicking operation.

3. The method according to claim 1, wherein the splitting operation comprises:
editing a new single piece of information;
selecting a contact corresponding to the new single piece of information; and
splitting the current session information related to the contact and containing the current time into two pieces of sub-session information, and setting the new single piece of information related to the contact to be an initial single piece of information containing the session at the current time.

4. The method according to any one of claims 1 to 3, wherein the grouping index is used for indicating a location of session information.

5. The method according to any one of claims 1 to 3, wherein the grouping condition comprises any one or more of the following: contact information of session information, grouping interval of session information, keyword of session information and theme of session information.

6. A device for displaying session information, comprising:
a first acquisition module configured to acquire a splitting operation for session information, wherein the splitting operation is used for splitting the session information into multiple pieces of sub-session information;
a second acquisition module configured to acquire a grouping condition and a grouping index for each piece of sub-session information according to the splitting operation;
a first construction module configured to construct a management structure and a display structure for each piece of sub-session information according to the grouping condition and the grouping index for each piece of sub-session information; and
a second update module configured to split the session information into multiple pieces of sub-session information according to the management structure and the display structure for each piece of sub-session information.

7. The device according to claim 6, wherein the splitting operation comprises:
in a piece of session information, clicking a single piece of information belonging to the session information; and
splitting the current session information into two pieces of new sub-session information defined by the single piece of information by the clicking operation.

8. The device according to claim 6, wherein the splitting operation comprises:
editing a new single piece of information;
selecting a contact corresponding to the new single piece of information; and
splitting the current session information related to the contact and containing the current time into two pieces of sub-session information, and setting the new single piece of information related to the contact to be an initial single piece of information containing the session at the current time.

9. A method for displaying session information, comprising:
acquiring a combination operation for session information, wherein the combination operation is used for combining at least two pieces of session information into one piece of new session information;
acquiring at least two pieces of session information requiring to be combined according to the combination operation, and acquiring a grouping condition and a grouping index for the new combined session information;
constructing a management structure and a display structure for the new combined session information according to the grouping condition and the grouping index of session information; and
combining multiple pieces of session information into one piece of new session information according to the management structure and the display structure of the new combined session information.

10. The method according to claim 9, wherein the combination operation comprises:
selecting a previous/next session information for combination; and
combining the current session information with the previous/next session information of which the contact is the same as and the time interval is close to that of the current session information into one piece of new session information.

11. The method according to claim 9, wherein the combination operation comprises:
combining multiple pieces of continuous session information based on a specific contact into one piece of new session information.

12. A device for displaying session information, comprising:
a third acquisition module configured to acquire a combination operation for session information, wherein the combination operation is used for combining at least two pieces of session information into one piece of new session information;
a fourth acquisition module configured to acquire at least two pieces of session information requiring to be combined according to the combination operation and acquire a grouping condition and a grouping index for the new combined session information;
a second construction module configured to construct a management structure and a display structure for the new combined session information according to the grouping condition and the grouping index of the session information; and
a second update module configured to combine multiple pieces of session information into one piece of new session information according to the management structure and the display structure of the new combined session information.
